# EUROPEAN PATENT SPECIFICATION

(11) **EP 1 864 759 B1**
(45) Date of publication and mention of the grant of the patent: **13.10.2010**
(21) Application number: 06730679.5
(22) Date of filing: 30.03.2006
(51) Int. Cl.: B25C 1/08

(54) **GAS COMBUSTION TYPE HAMMERING TOOL**
VERBRENNUNGSGASBETÄTIGTES SCHLAGWERKZEUG
OUTIL MARTELEUR A COMBUSTION DE GAZ

(30) Priority: 01.04.2005 JP 2005106650
(43) Date of publication of application: 12.12.2007
(73) Proprietor: MAX CO., LTD., Chuo-ku, Tokyo 103-8502 (JP)
(72) Inventor: YOKOCHI, Yasushi c/o MAX Co. Ltd., Chuo-ku, Tokyo 103-8502 (JP)
(74) Representative: Samson & Partner
(86) International application number: PCT/JP2006/306731
(87) International publication number: WO 2006/106866

(56) References cited:
- EP-A- 1 197 300
- WO-A-00/48293
- DE-A1- 19 906 585
- GB-A- 2 027 162
- JP-A- 11 239 983
- JP-A- 2002 144 253
- JP-A- 2004 130 506
- US-A- 4 483 473
- US-A- 4 643 386
- US-A- 5 875 562
- US-A- 5 959 379
- US-B1- 6 339 267

## Description

### Technical Field:

The present invention relates to a gas combustion type striking machine with the features of the first part of claim 1. Such a gas combustion type striking machine is known from US-A 4 483 473.

### Background Art:

There is known a combustion gas drive striking machine as an example of a gas combustion type striking machine. In the combustion gas drive striking machine, a combustible gas is injected into a hermetically closed combustion chamber, a mixture gas of the combustible gas and air is agitated at inside of the combustion chamber, the agitated mixture gas is combusted at inside of the combustion chamber and a high pressure combustion gas is generated. The high pressure combustion gas is operated to a strike piston contained at inside of a strike cylinder, and the strike piston is impulsively driven at inside of the strike cylinder. By a driver coupled to a lower face side of the strike piston, a nail is struck to a steel plate or concrete. In such a combustion gas drive striking machine, a vessel of a gas bottle or the like filled with the combustible gas is mounted to inside of the machine, a battery constituting a power source for igniting the combustible gas is mounted to the machine, and the striking machine is formed as a portable tool. Therefore, operation of striking a nail or a pin can be carried out without being constrained by a power supply source of electric power, compressed air or the like.

As described above, the combustion gas drive striking machine is provided with a rotating fan for generating a mixture gas of a predetermined air to fuel ratio by agitating to mix the combustible gas injected into the combustion chamber with air at inside of the combustion chamber. The rotating fan is rotated by an electric motor. The motor for rotating the rotating fan is contained at inside of a containing portion formed at a cylinder head at an upper portion of the combustion chamber. A shaft projected from the motor is projected into the combustion chamber by penetrating a bearing hole formed at a bottom portion of the containing portion.

However, when the mixture gas at inside of the combustion chamber is ignited to explode in operating an impulse machine, whereas the cylinder head is moved to an upper side by a combustion pressure, since the motor is operated with an inertia force, the motor is moved to a lower side relative to the cylinder head. Further, whereas when the strike piston driven by the combustion pressure impinges impulsively to a damper at a lower portion of the strike cylinder, also the cylinder head is moved to the lower side along with the machine main body, since the motor is operated with the inertia force, the motor is moved to the upper side relative to the cylinder head. In this way, by an acceleration applied in reciprocating the strike piston, the motor is vibrated at inside of the machine main body. Therefore, a significant influence is effected on reliability or service life of a total of the apparatus by exfoliating welding between the motor and other member or destructing a bearing.

Hence, as shown by JP-A-2004-130506, there is known a motor holding mechanism for holding an outer peripheral face of a motor and an inner wall of a containing portion by way of a damping member made of rubber. The motor is constructed by a structure of being suspended by a damping member having an elasticity, and therefore, even when a vibration in an up and down direction is applied to the motor, an impact is not applied to the motor per se. Therefore, the motor can be protected against an impact in up and down direction.

However, also a rotating fan disposed at inside of a combustion chamber receives operation of a combustion pressure and a shaft of the motor is swung in a front and rear direction and in a left and right direction, and therefore, the motor per se of the shaft is not only vibrated in the up and down direction but also strongly swung in the front and rear direction and in the left and right direction. Further, when the shaft of the motor is swung, strong friction or impact is brought about between the shaft and a bearing hole of a containing portion. In this way, according to the motor holding mechanism of the background art, damping is insufficient against vibration or impact in a direction orthogonal to the shaft of the motor, and there is a case of destructing the motor.
From US-A- 5 959 379 damping members are known, each in a shape of a short cylinder, which are contained at upper and lower portions of a motor at inside a containing portion. Further, US-A- 4 643 386 discloses a plural of grooves formed at respective damping members and finally US-A- 5 875 562 discloses a hand-held hair dryer with an insulating boot made of resilient rubber, which isolates the motor from transmission of its noise and vibrations to the handle of the hair dryer.

### Disclosure of the Invention

It is an object of the invention to improve a gas combustion type striking machine capable of promoting durability and reliability of a motor by effectively alleviating impacts or vibrations in all the directions applied to a motor for a rotating fan in operating the striking machine.

This object will be achieved for a known gas combustion type striking machine comprising the features of the second part of claim 1.

Thereby a mixture gas provided by agitating and mixing a combustible gas and air by the rotating fan is ignited to combust at inside of the combustion chamber, and a fastener of a nail or the like is struck by a pressure of a combustion gas produced by the combustion, wherein the motor is contained in the containing chamber by way of damping members in a shape of a short cylinder respectively having an elasticity, and the respective damping members are formed with a plural of grooves prolonged in an up and down direction at constant intervals along a peripheral direction.

Further, according to one or more embodiments of the invention, a plural of projections are formed at a face of the damping member brought into contact with an upper end or a lower end of the motor at constant intervals along a peripheral direction.

Further, according to one or more embodiments of the invention, a sheet-like motor sleeve made of a synthetic resin is interposed between an inner wall face of the containing portion and an outer peripheral face of the motor, and both side faces of the motor sleeve are formed with a plural of parallel projected streaks formed in an up and down direction alternately on a side of the inner wall face and a side of the outer peripheral face.

Further, according to one or more embodiments of the invention, an inner side face of the containing portion and the motor sleeve as well as the motor sleeve and the motor are respectively engaged with each other so as not to be able to be rotated relative to each other.

According to one or more embodiments of the invention, the motor is contained in the containing portion for the motor by way of the damping members in the shape of the short cylinder respectively having the elasticity at the upper and lower portions, and the respective damping members are formed with the plural of groove holes prolonged in the up and down direction at constant intervals along the peripheral direction. Therefore, even when the motor is slid in the up and down direction at inside of the motor sleeve by an impact in operating the gas combustion type striking machine, the impact by a vibration to a lower side is absorbed by the damping member at the lower portion to attenuate an acceleration applied to the motor, and an impact by a vibration to the upper side is absorbed by elastically deforming the damping member at the upper portion to attenuate acceleration applied to the motor. Therefore, the impacts both to the upper and lower sides are alleviated. Further, although when the damping members at the upper and lower portions absorb the impacts, the damping members are compressed to bend, the elastic deformations are absorbed by the groove hole. Therefore, the impacts can firmly be alleviated.

Further, the one end of the damping member is formed with the flange having the outer diameter substantially the same as the inner diameter of the containing portion of the motor, and a gap is formed between the inner side face of the containing portion and the outer peripheral face of the damping member.
Therefore, the impacts produced in operating the gas combustion type striking machine are absorbed by the damping members at the upper and lower portions. Therefore, although at this occasion, the damping member is compressed to expand to an outer side, the bending deformation is absorbed by the gap formed between the damping member and the containing portion, and therefore, the impact is effectively alleviated.

Further, the face of the damping member brought into contact with the upper end or the lower end of the motor is formed with the plural of projections at constant intervals. Therefore, in a state of containing the motor by way of the damping members on the upper and lower sides, the projections of the damping member on the upper and lower sides are compressed to slightly crash, and therefore, the motor is brought into a stable state of being fastened from the upper and lower sides by the upper and lower damping members.

Further, the sheet-like motor sleeve made of a synthetic resin is interposed between an inner wall face of the containing portion of the motor and an outer peripheral face of the motor, and side faces of the motor sleeve are formed with a plural of parallel projected streaks formed in the up and down direction on a side of the inner wall face and a side of the outer peripheral face. Therefore, even when the motor is combined with the containing portion to be tightly or loosely fitted with each other by dispersions in tolerances of the motor and the containing portion, the motor sleeve interposed between the motor and the containing portion is constituted by a shape of a wave by the projected streaks formed alternately at the two side faces, and the motor sleeve can be bent to deform in accordance with the tolerances. As a result, a clearance between the motor and the motor sleeve is ensured to be small, and tightening of the motor sleeve to the motor is not loosened.

Further, although when an explosive combustion is carried out at inside of the combustion camber, the rotating fan receives a pressure from a transverse direction to be violently swung to rattle from various directions orthogonal to an axial direction of the shaft of the motor, portions between the contiguous projected streaks of the motor sleeve are bent to deform, the elasticity works, and therefore, the pressure from the transverse direction can effectively be absorbed. Therefore, it is prevented that the motor and the inner side face of the containing portion as well as the shaft and the bearing hole of the containing portion are brought into strong contact with each other.

Further, the inner side face of the containing portion and the motor sleeve as well as the motor sleeve and the motor are engaged with each other so as not to be able to be rotated relative to each other. Therefore, it is excellently prevented that the motor is rotated in the containing portion and an accident of cutting the harness of the motor is avoided.

Other aspects and advantages of the invention will be apparent from the following description and the appended claims.

### Brief description of the drawings:

[Fig.1] Fig.1 is a vertical sectional view of an essential portion of a combustion gas drive striking machine.
[Fig.2] Fig.2 is a sectional view enlarging a portion of a combustion chamber of the gas combustion type striking machine.
[Fig.3A] Fig.3A is a perspective view of a damping member.
[Fig.3B] Fig.3B is a vertical sectional view of a center of the damping member.
[Fig.4A] Fig.4A is a front view of a motor sleeve.
[Fig.4B] Fig.4B is a rear view of the motor sleeve.
[Fig.4C] Fig.4C is a plane view enlarging the motor sleeve.
[Fig.5] Fig.5 is an enlarged vertical sectional view of a state of mounting the motor sleeve.
[Fig.6] Fig.6 is a disassembled perspective view of a motor holding mechanism.

### Description of Reference Numerals and Signs

11..combustion chamber
18..rotating fan
20..motor
21..shaft
22..containing portion
25, 26..damping members

### Best Mode for Carrying Out the Invention:

Exemplary embodiments of the invention will be explained in reference to the drawings as follows.

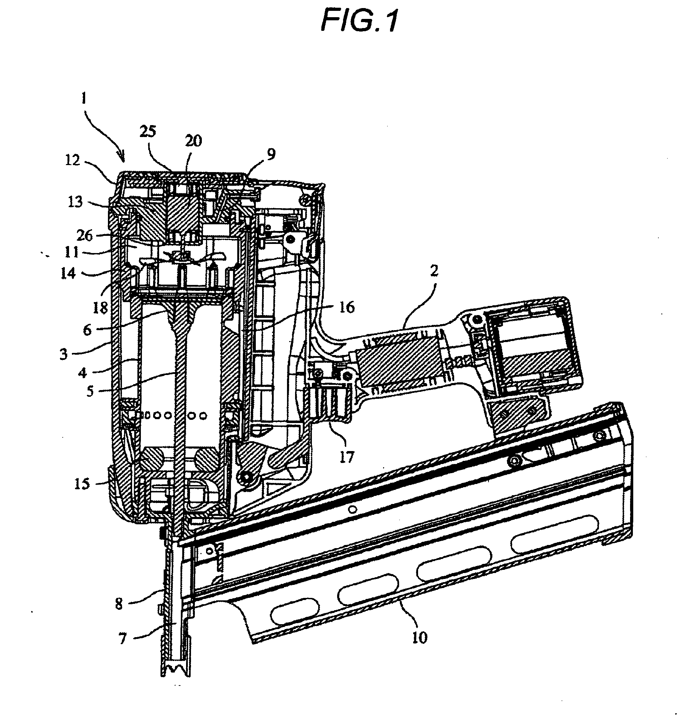

In Fig.1, notation 1 designates a gas combustion type nail striking machine, a strike cylinder 4 is provided at inside of a housing 3 integrally including a grip 2, and a strike piston 6 including a driver 5 for striking a nail is contained at inside of the strike cylinder 4 slidably in an up and down direction. A lower portion of the housing 3 is formed with a nose portion 8 having an injection port 7, a rear side of the nose portion 8 is continuously provided with a magazine 10 charged with connected nails, nails at inside of the magazine 10 are successively supplied to the injection port, and are constituted to be struck out to a struck member from the injection port 7 by being struck by the driver 5.

An upper side of the strike cylinder 4 is formed with a combustion chamber 11 for generating a mixture gas of the combustible gas and air and combusting the mixture gas. The combustion chamber 11 is formed by a movable sleeve 14 in a ring-like shape arranged between an upper end of the strike cylinder 4 at which an upper end face of the strike piston 6 is exposed and an upper wall (cylinder head) 13 formed at inside of an upper housing 12, and is constituted such that a pressure of a combustible gas produced by generating and explosively combusting a mixture gas of a combustible gas and air at inside of the combustion chamber 11 is operated to the strike piston 6 to drive the strike piston 6 to a bumper 15 arranged at a position of a lower dead center at inside of the strike cylinder 4.

The movable sleeve 14 forming the combustion chamber 11 is slidably arranged along a direction of operating the strike piston 6, the movable sleeve 14 is disposed at a lower position before starting the nail striking machine 1, and inside of the combustion chamber 11 is communicated with the atmosphere by way of a vent port (not illustrated) formed by penetrating the upper wall 13 and a path 16 formed between an outer peripheral face of the strike cylinder 4 and an inner peripheral face of the housing 3. Further, in starting the nail striking machine, by pressing the nose portion 7 to the struck member, the movable sleeve 14 is moved relatively to an upper position shown in Fig.1 to block inside of the combustion chamber 11 from the atmosphere.

The upper housing 11 forming the upper wall 13 of the combustion chamber 11 is arranged with an injection nozzle 9 communicated with a gas vessel and an ignition plug (not illustrated) for igniting and combusting the mixture gas. The ignition plug ignites the mixture gas based on a switch operated by operating a trigger 17.

Further, the upper housing 12 is provided with a rotating fan 18 for generating a mixture gas of a predetermined air to fuel ratio at inside of the combustion chamber 11 by agitating the combustible gas injected into the combustion chamber 11 with air at inside of the combustion chamber 11.

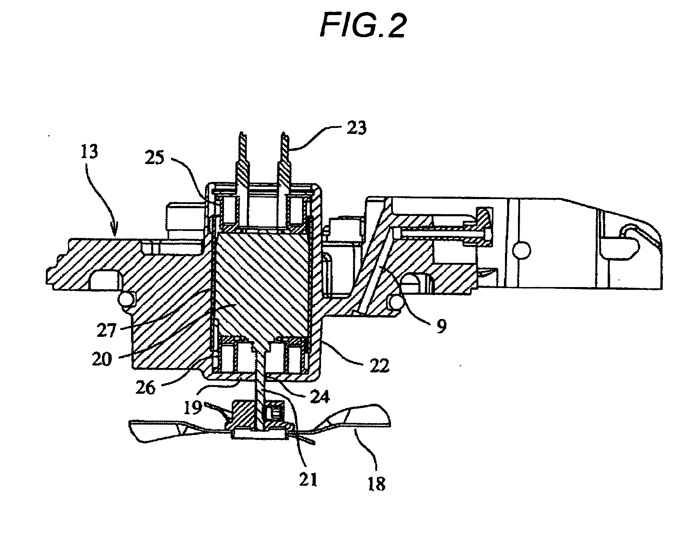

As shown by Fig.2, the rotating fan 18 is fixed to a front end of a shaft 21 of an electric motor 20, and the motor 20 is contained to be arranged at inside of a containing portion 22 in a shape of a bottomed cylinder formed at the upper wall 13 of the combustion chamber 11. A harness 23 is connected to a center of an upper face of the motor 20, the shaft 21 is provided at a center of a lower face, and the shaft 21 is projected into the combustion chamber 11 by penetrating a bearing hole 24 formed at a bottom portion 19 of the containing portion 22.

The containing portion 22 is formed with a space portion slightly larger than the motor 20. Further, at inside of the containing portion 22, the motor 20 is held by way of damping members 25, 26 having an elasticity and a motor sleeve 27 made of a synthetic resin.

The motor 20 is contained to be fixed to the containing portion 22 by way of the damping members 25, 26 at upper and lower portions thereof. The respective damping members 25, 26 are formed by a shape of a short cylinder by an elastic material of silicone species rubber or the like excellent in heat resistance.

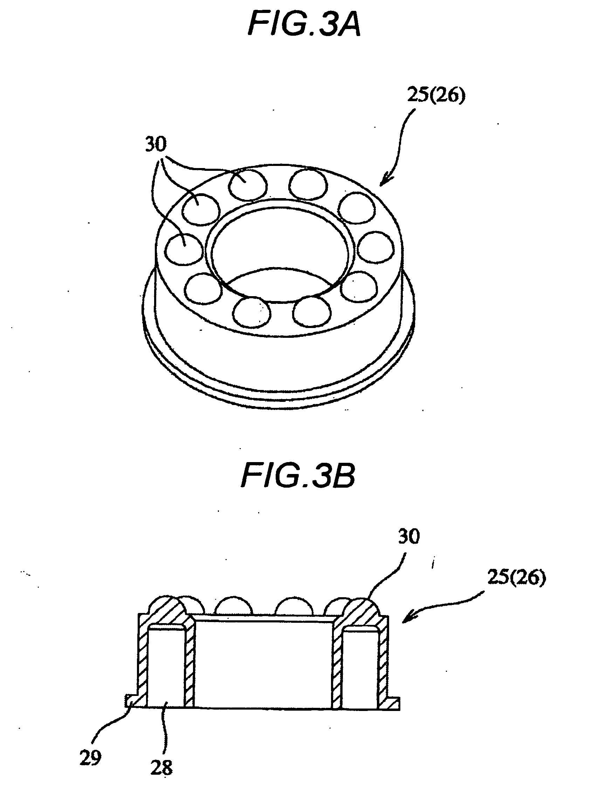

As shown by Fig.3A and Fig. 3B, each of the damping members 25, 26 is formed with a plural of groove holes 28 prolonged in the up and down direction at constant intervals along a peripheral direction. The respective groove holes 28 do not penetrate the damping members 25, 26, the groove hole 28 of the upper damping member 25 is opened to an upper side, the groove hole 28 of the lower damping member 26 is opened to a lower side.

Next, an upper end of the upper damping member 25 and a lower end of the lower damping member 26 are formed with flanges 29 having an outer diameter substantially the same as an inner diameter of the containing portion 22. Thereby, a gap is producedbetween an inner side face of the upper containing portion 22 and outer peripheral faces of the damping members 25, 26.

Further, faces of the damping members 25, 26 brought into contact with an upper end or a lower end of the motor 20, that is, a lower face of the upper damping member 25 and an upper face of the lower damping member 26 are respectively formed with a plural of projections 30 in a semispherical shape at constant intervals along the peripheral direction.

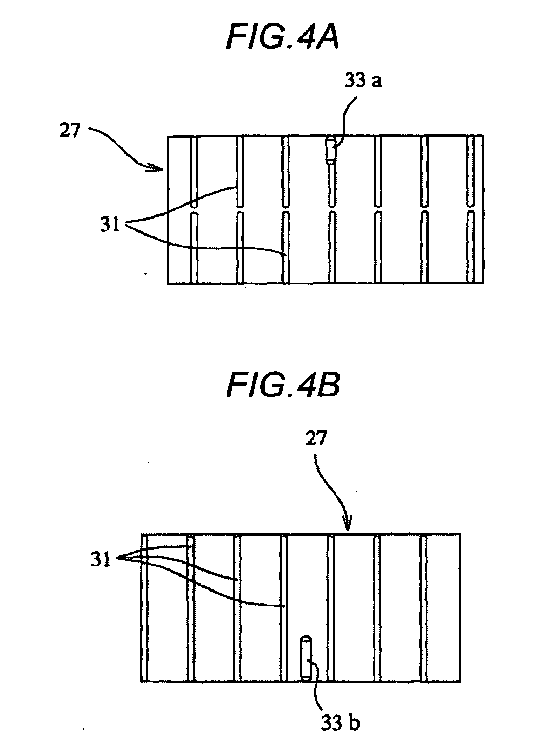

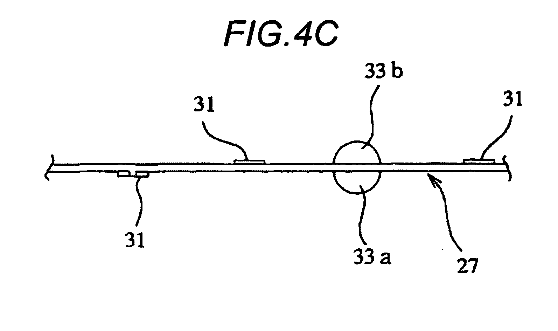

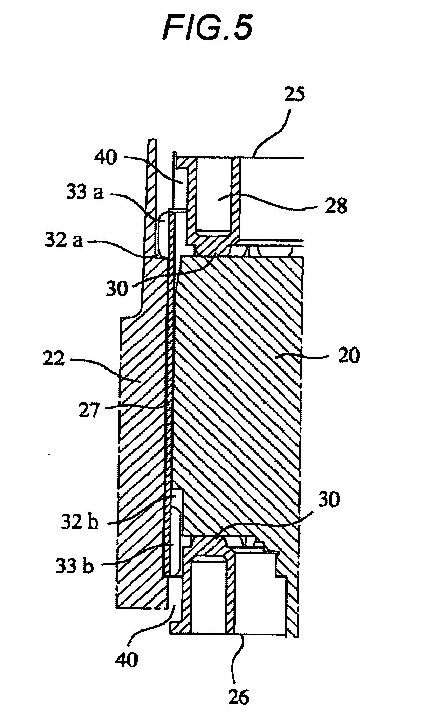

Next, the sheet-like motor sleeve 27 is interposed between the inner wall face of the containing portion 22 and the outer peripheral face of the motor 20. As shown by Fig.4A, Fig. 4B, and Fig.4C, the motor sleeve 27 is formed in the sheet-like shape from a synthetic resin material of polyacetal resin (POM) or the like, and two side faces thereof are formed with a plural of projected streaks 31 at equal intervals in parallel and in the up and down direction. Further, the projected streak 31 on one side of the motor sleeve 27 and the projected streak 31 on other side thereof are alternately arranged. As shown by Fig. 5, a height of the motor sleeve 27 is formed to be slightly larger than a length dimension of the motor 20. Further, portions thereof extruded to upper and lower sides of the motor 20 are brought into gaps 40 between the containing portion 22 and the damping members 25, 26.

Further, as shown by Fig.5, engaging projected portions 33a, 33b are formed at an upper outer side face and a lower inner side face of a center portion of the motor sleeve 27 respectively in the up and down direction, in correspondence therewith, engaging recess portions 32a, 32b engageable with the upper side engaging projected portion 33a and the lower side engaging projected portion 33b are formed at an upper portion of the inner face of the containing portion 22 and a lower portion of an outer peripheral face of the motor 20.
Thereby, the inner face of the containing portion 22 is brought into a state of being engaged with the motor sleeve 27, and the motor sleeve 27 is brought into a state of being engaged with the motor 20, respectively.

Further, although the motor sleeve 27 is engaged so as not to slip down from the containing portion 22, the motor 20 can be slid in the up and down direction relative to the motor sleeve 27 and is engaged therewith so as not to be able to rotate. It is not necessary that a width (height) of the motor sleeve 27 is larger than the height dimension of the motor 20.

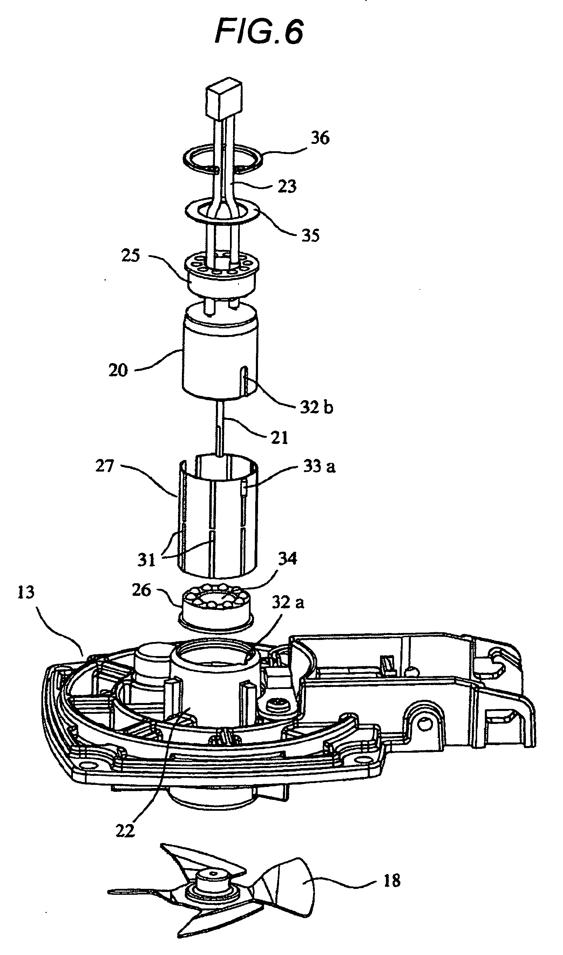

When the motor 20 is contained in the containing portion 22, as shown by Fig.6, first, the lower damping member 26 is inserted from an upper end opening portion of the containing portion 22 of the cylinder head, the motor sleeve 27 in the sheet-like shape is inserted to fit to a surrounding of the motor 2 0 in a state of being rounded to turn around from thereabove, the shaft 21 is projected to the combustion chamber 11 (refer to Fig.1) by penetrating the bearing hole 24 (refer to Fig.2) of the bottom portion 19 of the containing portion 22 by passing the hole 34 at a center of the lower damping member 26, the upper damping member 25 is inserted further from thereabove, and the upper end opening portion of the containing portion 22 is fixed by a stop ring 36 by way of a washer 35. Thereby, in a state of containing the motor 20 by way of the damping members 25, 26 on upper and lower sides, the projections 30 of the upper and lower damping members are compressed and is crashed slightly as shown by Fig.5, and therefore, the motor 20 is stabilized by being brought into a state of being fastened from upper and lower sides by the upper and lower damping members 25, 26. Further, after fixing the rotating fan 18 at a lower end of the shaft 21, the upper wall 13 may be attached to the housing 3.

Meanwhile, even when the motor 20 is combined with the containing portion 22 to be fitted tightly or loosely by dispersions in tolerances of the motor 20 and the containing portion 22, as described above, the motor sleeve 27 interposed between the motor 20 and the containing portion 22 is constituted by a wave shape by the projected streaks 31 formed alternately at the two side faces, and can be bent to deform in accordance with the tolerances, and therefore, a clearance between the motor 20 and the motor sleeve 27 is ensured to be small, and fastening the motor sleeve 27 to the motor 20 is not loosened.

Further, although lengths of the engaging recess portion 32a of the upper portion of the containing portion 22 and the engaging projected portion 33a of the upper portion of the motor sleeve 27 are substantially the same, the engaging recess portion 32b of the lower portion of the motor 20 is formed to be longer than the engaging projected portion 33b of the lower portion of the motor sleeve 27 in the up and down direction. Therefore, although the motor sleeve 27 is supported by the containing portion 22 so as not to slip down, the motor 20 is made to be able to slide in the up and down direction relative to the motor sleeve 27. Further, the motor 20 is only brought into contact with the projected streaks 31 of the motor sleeve 27, and therefore, a friction resistance therebetween is small. Therefore, the motor 20 can smoothly be slid.

Next, in striking a nail, when the mixture gas at inside of the combustion chamber 11 is ignited and combusted explosively, by the combustion pressure, the strike piston is driven to the lower side, and therefore, the upper wall 13 of the containing portion 22 is rapidly moved to the upper side along with the upper housing 12 by a reaction thereof. The motor 20 is operated with an inertia force, and therefore, the motor 20 is impulsively moved to the lower side relative to the containing portion 22 formed at the upper wall 13. Further, although when the strike piston 6 driven to the lower side impinges impulsively to the bumper 15 of the lower portion of the strike cylinder 4, the containing portion 22 is also moved to the lower side rapidly along with the housing 3, since the motor 20 is operated with the inertia force, the motor 20 is impulsively moved to the upper side relative to the containing portion 22. The impulses are further added with the impulse of striking the nail to the struck member or the like, and therefore, the motor 20 is violently vibrated in the up and down direction. In contrast thereto, the motor 20 is slid in the up and down direction at inside of the motor sleeve 27 in accordance with the impulses applied in the up and down direction, the impulse by the vibration to the lower side is absorbed by the damping member 26 of the lower portion to attenuate an acceleration applied to the motor 20, and the impulse by the vibration to the upper side is absorbed by the damping member 25 of the upper portion to attenuate the acceleration applied to the motor 20, and therefore, all the impulses are alleviated.

Meanwhile, the damping members 25, 26 of the upper and lower portions are compressed in absorbing the impulses, and therefore, expanded to the outer side, however, the elastic deformation is absorbed by the groove holes 28 aligned along a peripheral direction and the gap 40 formed between the damping members 25, 26 and the containing portion 22. Further, the motor 20 is made to be slidable in the up and down direction relative to the motor sleeve 27, and therefore, the motor 20 is slid in accordance with the impulse, however, the impulse is absorbed by the damping members 25, 26, and the impact can firmly be alleviated. Further, the damping members 25, 26 are constituted by the silicone species rubber excellent in heat resistance, and therefore, can maintain a stable function without being melted at high temperatures or deteriorated in a flexibility at low temperatures.

Next, when explosive combustion is carried out at inside of the combustion chamber 11, hot wind at high temperature and high pressure is generate at inside of the combustion chamber 11, and therefore, the rotating fan 18 receives a pressure from a transverse direction to be violently swung to rattle from various directions orthogonal to an axial direction of the shaft 21. However, the motor 20 is contained in the containing portion 22 by way of the motor sleeve 27, further, the inner and outer side faces of the motor sleeve 27 are formed with the plural of projected streaks 31 in the up and down direction, and therefore, portions among the inner and outer projected streaks 31 of the motor sleeve 27 are bent to deform, and by the elasticity, the pressure in the transverse direction can effectively be absorbed. Therefore, the motor 20 and the inner side face of the containing portion 22 as well as the shaft 21 and the bearing hole 24 are not brought into strong contact with each other, and a failure is prevented. Further, also the motor sleeve 27 is constituted by polyacetal resin (POM) excellent in heat resistance, and therefore, the stable function can be maintained without deforming the motor sleeve 27 even under high temperature and high pressure.

Further, as described above, the motor 20 is constructed by a constitution of being arranged at inside of the containing portion 22 by way of the motor sleeve 27, and therefore, the motor 20 receives a force of rotating the motor 20 per se by a rotating force of the motor 20 or a vibration. However, the inner side face of the containing portion 22 and the motor sleeve 27 as well as the motor sleeve 27 and the motor 20 are engaged with each other by the engaging projected portions 33a, 33b and the engaging recess portions 32a, 32b. Therefore, the motor 20 is prevented from being rotated by the engaging portions, and therefore, an accident of cutting the harness 23 of the motor 20 can be avoided.

As described above, according to the above-described motor holding mechanism, durability and reliability of the motor 20 can be promoted by effectively alleviating the impulses and the vibrations in all the directions applied to the motor 20 for the rotating fan 18 in actual striking.

Further, the bending deformation of the damping members 25, 26 when impacted can be absorbed only by the groove holes 28, or also by the gap 40 between the containing portion and the damping member by the flange 29.

The motor sleeve may be constituted by a shape of a wave. Even constituted by the shape of the wave, both sides thereof are invariably formed with the projected streaks alternately.

Further, the engaging projected portions 33a, 33b and the engaging recess portions 32a, 32b of the containing portion 22 and the motor sleeve 27 and the motor 20 may be constructed by a constitution of forming the engaging projected portions at the containing portion 22 and the motor 20 and forming the engaging recess portions (may be notches) at the motor sleeve 27 contrary to the above-described example.

Further, the groove hole formed at the damping member may be constituted by a through hole penetrating the damping member in the up and down direction, or may be constituted by a groove formed at the outer peripheral face or the inner peripheral face of the damping member in the up and down direction.

Also a shape of the damping member may be constituted by a shape of a truncated cone in an outer shape thereof. In this case, the flange is not needed.

The application is based on Japanese Patent Application (Japanese Patent Application No.2005-106650) filed on April 1, 2005.

### Industrial Applicability:

The invention is applicable as a motor holding mechanism of a gas combustion type striking machine.

## Claims

1. A gas combustion type striking machine comprising:
a combustion chamber (11) provided on an upper side of a strike cylinder (4);
a containing portion (22) formed at an upper wall of the combustion chamber (11) for containing a motor (20);
a rotating fan (18) coupled with a shaft (21) of the motor (20) penetrated through a bottom portion (19) of the containing portion (22) to face the combustion chamber (11);
**characterised by**
damping members (25, 26) each in a shape of a short cylinder contained at upper and lower portions of the motor (20) at inside of the containing portion (22);
a plural of grooves (28) formed at the respective damping members (25, 26)
a flange (29) provided at one end of the damping member (25, 26) and provided with an outer diameter substantially the same as an inner diameter of the containing portion (22);
wherein a gap is formed between an inner side face of the containing portion (22) and an outer peripheral face of the damping member (25, 26).

2. The gas combustion type striking machine according to Claim 1, wherein the plural of grooves (28) are formed to extend in an up and down direction at constant intervals along peripheral directions of the respective damping members (25, 26).

3. The gas combustion type striking machine according to Claim 1, wherein the gas combustion type striking machine is adapted such that a mixture gas provided by agitating and mixing a combustible gas and air by the rotating fan (18) is ignited and combusted at inside of the combustion chamber (11), and a fastener is struck out by a pressure of a combustion gas produced by the combustion.

4. The gas combustion type striking machine according to Claim 1, further comprising:
a plural of projections (30) formed at a face of the damping member (25, 26) brought into contact with an upper end or a lower end of the motor (20).

5. The gas combustion type striking machine according to Claim 4, wherein the plural of projections (30) are formed at constant intervals along a peripheral direction.

6. The gas combustion type striking machine according to Claim 1, further comprising:
a sheet-like motor sleeve (27) provided between an inner wall face of the containing portion (22) and an outer peripheral face of the motor (20) and made of a synthetic resin.

7. The gas combustion type striking machine according to Claim 6, further comprising:
a plural of parallel projected streaks (31) formed in the up and down direction at both side faces of the motor sleeve (27);
wherein the plural of parallel projected streaks (31) are formed alternately on a side of the inner wall face and a side of the outer peripheral face.

8. A motor holding mechanism of the gas combustion type striking machine according to Claim 6, wherein the inner side face of the containing portion (22) and the motor sleeve (27) as well as the motor sleeve (27) and the motor (20) are respectively engaged with each other so as not to be able to be rotated relative to each other.

## Patentansprüche

1. Schlagmaschine vom Gasverbrennungstyp, welche umfasst:
eine Verbrennungskammer (11), die auf einer Oberseite eines Schlagzylinders (4) vorgesehen ist;
einen Aufnahmeabschnitt (22), der an einer oberen Wand der Verbrennungskammer (11) gebildet ist, zum Aufnehmen eines Motors (20);
einen rotierenden Ventilator (18), der mit einer Welle (21) des Motors (20) gekoppelt ist, die einen Bodenabschnitt (19) des Aufnahmeabschnitts (22) durchdringt, um gegenüber der Verbrennungskammer (11) zu liegen;
**gekennzeichnet durch**
Dämpfungselemente (25, 26), jedes in einer Form eines kurzen Zylinders, die in einem oberen und unteren Abschnitt des Motors (20) im Inneren des Aufnahmeabschnitts (22) aufgenommen sind;
eine Vielzahl von Rillen (28), die an den jeweiligen Dämpfungselementen (25, 26) gebildet sind
einen Flansch (29), der an einem Ende des Dämpfungselements (25, 26) vorgesehen ist und einen Außendurchmesser aufweist, der im Wesentlichen derselbe wie ein Innendurchmesser des Aufnahmeabschnitts (22) ist;
wobei eine Lücke zwischen einer Innenseitenfläche des Aufnahmeabschnitts (22) und einer Außenumfangsfläche des Dämpfungselements (25, 26) gebildet ist.

2. Schlagmaschine vom Gasverbrennungstyp gemäß Anspruch 1, wobei die mehreren Rillen (28) gebildet sind, um sich in einer Auf- und Abrichtung in konstanten Abständen entlang Umfangsrichtungen der jeweiligen Dämpfungselemente (25, 26) zu erstrecken.

3. Schlagmaschine vom Gasverbrennungstyp gemäß Anspruch 1, wobei die Schlagmaschine vom Gasverbrennungstyp so ausgelegt ist, dass eine Gasmischung, die bereitgestellt wird durch Schütteln und Mischen eines Verbrennungsgases und Luft durch den rotierenden Ventilator (18), im Inneren der Verbrennungskammer (11) gezündet und verbrannt wird, und ein Befestigungselement durch einen durch die Verbrennung erzeugten Druck eines Verbrennungsgases ausgestoßen wird.

4. Schlagmaschine vom Gasverbrennungstyp gemäß Anspruch 1, welche ferner umfasst:
eine Vielzahl von Vorstehungen (30), die an einer Fläche des Dämpfungselements (25, 26) gebildet sind, das mit einem oberen Ende oder einem unteren Ende des Motors (20) in Kontakt gebracht ist.

5. Schlagmaschine vom Gasverbrennungstyp gemäß Anspruch 4, wobei die Vielzahl von Vorstehungen (30) in konstanten Abständen entlang einer Umfangsrichtung gebildet sind.

6. Schlagmaschine vom Gasverbrennungstyp gemäß Anspruch 1, welche ferner umfasst:
eine blattähnliche Motormanschette (27), die zwischen einer Innenwandseite des Aufnahmeabschnitts (22) und einer Außenumfangsfläche des Motors (20) vorgesehen ist und aus einem synthetischen Harz gemacht ist.

7. Schlagmaschine vom Gasverbrennungstyp gemäß Anspruch 6, welche ferner umfasst:
eine Vielzahl paralleler vorstehender Streifen (31), die in der Auf- und Abrichtung an beiden Seitenflächen der Motormanschette (27) gebildet sind;
wobei die Vielzahl von parallelen vorstehenden Streifen (31) abwechselnd auf einer Seite der Innenwandfläche und einer Seite der Außenumfangsfläche gebildet sind.

8. Motorhaltemechanismus der Schlagmaschine vom Gasverbrennungstyp gemäß Anspruch 6, wobei die Innenseitenfläche des Aufnahmeabschnitts (22) und die Motormanschette (27) sowie die Motormanschette (27) und der Motor (20) jeweils miteinander in Eingriff stehen, um nicht relativ zueinander rotiert werden zu können.

## Revendications

1. Machine de frappe de type à combustion de gaz comprenant :
une chambre de combustion (11) disposée sur un côté supérieur d'un cylindre de frappe (4) ;
une partie réceptrice (22) formée au niveau d'une paroi supérieure de la chambre de combustion (11) pour contenir un moteur (20) ;
une soufflante rotative (18) couplée à un arbre (21) du moteur (20) introduite à travers une partie inférieure (19) de la partie réceptrice (22) pour faire face à la chambre de combustion (11) ;
**caractérisée par**
des organes d'amortissement (25, 26) chacun sous la forme d'un cylindre court contenu au niveau de parties supérieure et inférieure du moteur (20) à l'intérieur de la partie réceptrice (22) ;
une pluralité de rainures (28) formées au niveau des organes d'amortissement (25, 26) respectifs ;
un flasque (29) disposé à une extrémité de l'organe d'amortissement (25, 26) et pourvu d'un diamètre externe sensiblement identique à un diamètre interne de la partie réceptrice (22) ;
où un espace est formé entre une face latérale interne de la partie réceptrice (22) et une face périphérique externe de l'organe d'amortissement (25, 26).

2. Machine de frappe de type à combustion de gaz selon la revendication 1, dans laquelle la pluralité de rainures (28) est formée pour s'étendre vers le haut et vers le bas à des intervalles constants le long de directions périphériques des organes d'amortissement (25, 26) respectifs.

3. Machine de frappe de type à combustion de gaz selon la revendication 1, dans laquelle la machine de frappe de type à combustion de gaz est adaptée de telle sorte qu'un mélange de gaz fourni en agitant et mélangeant un gaz combustible et de l'air par la soufflante rotative (18) est allumé et brûlé à l'intérieur de la chambre de combustion (11), et une pièce de fixation est frappée par une pression d'un gaz de combustion produit par la combustion.

4. Machine de frappe de type à combustion de gaz selon la revendication 1, comprenant en outré :
une pluralité de saillies (30) formées en face de l'organe d'amortissement (25, 26) amené en contact avec une extrémité supérieure ou une extrémité inférieure du moteur (20).

5. Machine de frappe de type à combustion de gaz selon la revendication 4, dans laquelle la pluralité de saillies (30) est formée à des intervalles constants le long d'une direction périphérique.

6. Machine de frappe de type à combustion de gaz selon la revendication 1, comprenant en outré :
une chemise de moteur de type feuille (27) disposée entre une face de paroi interne de la partie réceptrice (22) et une face périphérique externe du moteur (20) et constituée d'une résine synthétique.

7. Machine de frappe de type à combustion de gaz selon la revendication 6, comprenant en outré :
une pluralité de stries projetées parallèles (31) formées vers le haut et vers le bas au niveau des deux faces latérales de la chemise de moteur (27) ;
où la pluralité de stries projetées parallèles (31) est formée de façon alternée sur un côté de la face de paroi interne et un côté de la face périphérique externe.

8. Mécanisme de maintien de moteur de la machine de frappe de type à combustion de gaz selon la revendication 6, dans lequel la face latérale interne de la partie réceptrice (22) et la chemise de moteur (27) ainsi que la chemise de moteur (27) et le moteur (20) sont respectivement mis en prise les uns avec les autres de façon à ne pas pouvoir tourner les uns par rapport aux autres.
